# EUROPEAN PATENT SPECIFICATION

(11) **EP 0 716 515 B1**
(45) Date of publication and mention of the grant of the patent: **04.08.1999**
(21) Application number: 94119012.6
(22) Date of filing: 02.12.1994
(51) Int. Cl.: H04B 10/08, G01M 11/00

(54) **Arrangement for providing optical signals with different wavelengths and arrangement and method for operating and testing an optical device**
Vorrichtung zur Generierung von optischen Signalen mit unterschiedlichen Wellenlängen und Vorrichtung und Verfahren zum Betreiben und Prüfen einer optischen Vorrichtung
Arrangement pour générer des signaux optiques avec différentes longueurs et arrangement et procédé pour opérer et tester un dispositif optique

(43) Date of publication of application: 12.06.1996
(73) Proprietor: Hewlett-Packard GmbH, D-71034 Böblingen (DE)
(72) Inventor: Leckel, Edgar, D-71131 Jettingen (DE); Müller, Emmerich, D-71134 Aidlingen (DE)
(74) Representative: Kurz, Peter

(56) References cited:
- EP-A- 0 548 935
- JOURNAL OF LIGHTWAVE TECHNOLOGY, vol.12, no.3, March 1994, NEW YORK US pages 463 - 470 KIKUSHIMA 'AC and DC gain tilt of erbium-doped fibre amplifiers'
- JOURNAL OF LIGHTWAVE TECHNOLOGY, vol.7, no.4, April 1989, NEW YORK, US pages 615 - 624 FRENKEL ET AL 'Angle-tuned etalon filters for optical channel selection in high density wavelength division multiplexed systems'
- BERND MAISENBACHER, EDGAR LECKEL, ROBERT JAHN, MICHAEL POTT: "Tunable Laser Sources for Optical Amplifier Testing", HEWLETT-PACKARD JOURNAL, , 01-02-1993, vol. 44, no. 1, pages 11 to 19

## Description

### FIELD OF THE INVENTION

This invention relates to an arrangement for providing optical signals with different wavelengths and an arrangement and method for the measurement of the noise of an optical device.

### BACKGROUND OF THE INVENTION

Arrangements and methods for the operational test of active and passive optical devices, such as amplifiers, are commonly used in optical communication systems. In practice there is a need for testing wavelength dependent devices or components for their wavelength dependence. This requires testing of several device parameters over a single wavelength and testing with multiple wavelengths. Testing at a single wavelength is easily achieved with a laser source. For testing over a wavelength range, commonly a tunable laser or other sources are used. In practice there is a need to test devices with multiple wavelengths applied at the same time. Such devices are for example EDFAs used in wavelength division multiplexing (WDM) applications. For these publications it is already known to use several single wavelength laser sources or a set of tunable laser sources.

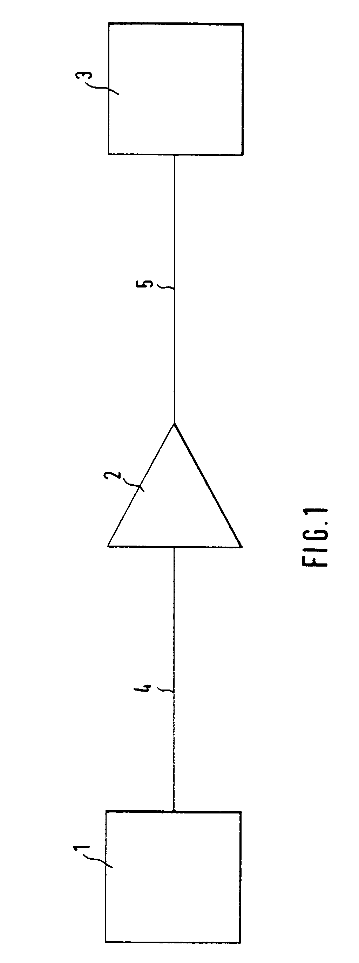

Such application is described in Hewlett-Packard Journal, vol. 44, no. 1, Feb. 1993, pages 11-19 and regards tunable laser sources for optical amplifier testing. Two models of laser sources are described tuning over wavelength ranges of 50 and 65 nanometers using grating-tuned external-cavity lasers with precisely controlled wavelength and power level. They are designed for testing wideband components such as erbium-doped fiber amplifiers (EDFAs). Figure 1 shows a block diagram of a communication system using wavelength division multiplexers (WDMs) and erbium-doped fiber amplifiers to increase transmission capacity. Several laser sources generate optical signals with wavelengths λ₁ - λₙ which are applied simultaneously to a wavelength division multiplexer, are combined, applied to an EDFA and redistributed at a receiver terminal by a wavelength division multiplexer.

As several laser sources are needed to perform these tests in the mentioned applications the test equipment is very expensive and difficult to handle.

Thus, it is an object of the present invention to provide an improved arrangement and method for testing optical devices with multiple wavelengths applied to the device under test at the same time. This object is solved by the independent claims. Preferred embodiments are shown by the dependent claims.

### SUMMARY OF THE INVENTION

The present invention relates to an arrangement and a method for the measurement of a parameter of an optical device and the optical device is of the type that is used to work with multiple optical signals with different wavelengths simultaneously.

Basically, an arrangement according to the invention comprises:
a single optical source generating multiple optical signals having different wavelengths, said multiple optical signals being applied to said optical device one after another;
switching means applying said multiple optical signals of said optical source one after another to said optical device ;
analysing means analysing a response signal of said optical device to be tested and
said multiple optical signals are applied to said optical device one after another within the recovery time from the noise level with a signal applied to said device to the noise level with no signal.

The invention proposes to use a multiplexed laser source generating multiple wavelengths so that the component, device or system under test, having a recovery time, reacts in the same way, as it does when many single laser sources are applied at the same time. Thus, the core of the invention is to time multiplex the multiple wavelengths generated by a tunable laser or another source and to perform time multiplexing so fast that the component, device or system under test, having a recovery time, does not recognize that the different wavelengths are applied one after the other. It will be understood that any optical device in the field of the laser technology is meant which comprises the mentioned recovery time, such as optical devices in optical communication networks, biological and chemical substances, particularly cells and DNA-structures and photosensitive drums in laser printers.

According to one embodiment of the invention the device under test is an optical amplifier, in particular an erbium-doped fiber amplifier (EDFA) or a praseodymium-doped fiber amplifer (PDFA). An important parameter to measure is the gain and noise figure of this amplifier. In future applications this amplifier should be used in wavelength division multiplexed systems. In the current state these systems use four different channels (wavelengths) to transmit optical signals. Thus, for a complete operational test of the amplifier four optical signals with different wavelengths have to be applied to the amplifier for operation and testing. Due to the physics of the EDFA the recovery time from the noise level with signal applied to the amplifier to the noise level without signal is slow (≈ 10 ms). According to the invention, the four different wavelengths generated by a single tunable laser are applied one after the other to the device under test within its recovery time, so that the device under test does not recognize that there is only one wavelength signal present at a time.

The main advantage of the invention is, that one single fast multiplexed tunable laser source is sufficient to operate a device with several channels or to perform the same measurements as a set of laser sources generating each a signal with a single wavelength. With the arrangement according to the invention, the operation or the mentioned tests at multiple wavelengths can be performed inexpensive and much easier than by a set of lasers.

According to a first embodiment of the invention a tunable laser is used to generate the multiple optical signals. A tunable laser allows to generate optical signals with different wavelengths one after the other.

According to a second embodiment of the invention the control input of the tunable laser is connected to the output of a pattern generator. The pattern generator multiplexes the multiple signals with different wavelengths of the tunable laser. By the pattern generator the time interval between switching from one wavelength to another of the signals generated by the tunable laser is easily adjustable in a wide range. It will be understood that the pattern generator can be substituted by any other device which switches the tunable laser from one wavelength to another within the recovery time of the device under test.

According to a third embodiment of the invention an optical source is used instead of a laser. Such a source generates several wavelengths at the same time. According to the invention it is proposed to comprise a rotating set of filters being transparent for the different wavelengths the device operates with and to dispose them between the output of the white light source and the input of the optical component, device or system to be tested. The rotation of the set of filters is carried out in such a manner that the different wavelengths of the light generated by the source are applied to the device under test or under operation one after each other within the recovery time of the device under test.

In a fourth embodiment the optical device to be tested or to be operated is an amplifier, in particular an erbium-doped fiber amplifier (EDFA) which can be used in wavelength division multiplexing applications and working under multiple wavelengths simultaneously.

It is understood and expressly noted that the present invention relates to all useful and novel combinations of the above disclosed features, whether alone or in any other arbitrary combination. Furthermore, all cited advantages can be seen as objects solved by the invention in its entirety.

### BRIEF DESCRIPTION OF THE DRAWINGS

For better understanding of the present invention, together with other and further objects, advantages and capabilities thereof, reference is made to the accompanying drawings, which are incorporated herein by reference and in which:
- Fig. 1: depicts a block diagram of an arrangement generating multiple input signals for testing an erbium-doped fiber amplifier (EDFA) according to prior art;
- Fig. 2: shows a block diagram of a first arrangement for testing an optical device according to the invention comprising a pattern generator controlling the time interval between the different signals generated by a tunable laser;
- Fig. 3: depicts the control signal generated by the pattern generator in Fig. 2 as a function of time.
- Fig. 4: shows a block diagram of a second arrangement for testing or operating an optical device comprising a further laser with regard to Fig. 3 being separately adjustable;

Fig. 1 shows a known arrangement for testing various parameters of an erbium-doped fiber amplifier (EDFA) 2. The output of a tunable laser 1 is connected with the input of the EDFA 2 via an optical fiber 4. The output of the EDFA is connected with the input of an optical signal analyzer (OSA) 3 via an optical fiber 5. For analyzing the characteristics of the EDFA at different wavelengths, the tunable laser 1 is switched to a first wavelength for a first measurement. The optical signal analyzer 3 analyzes the various parameters of the EDFA, particularly gain and noise and displays them to the operator. To analyze the characteristics of the EDFA under a signal with a second wavelength the operator switches the tunable laser source 1 to a second wavelength and so on.

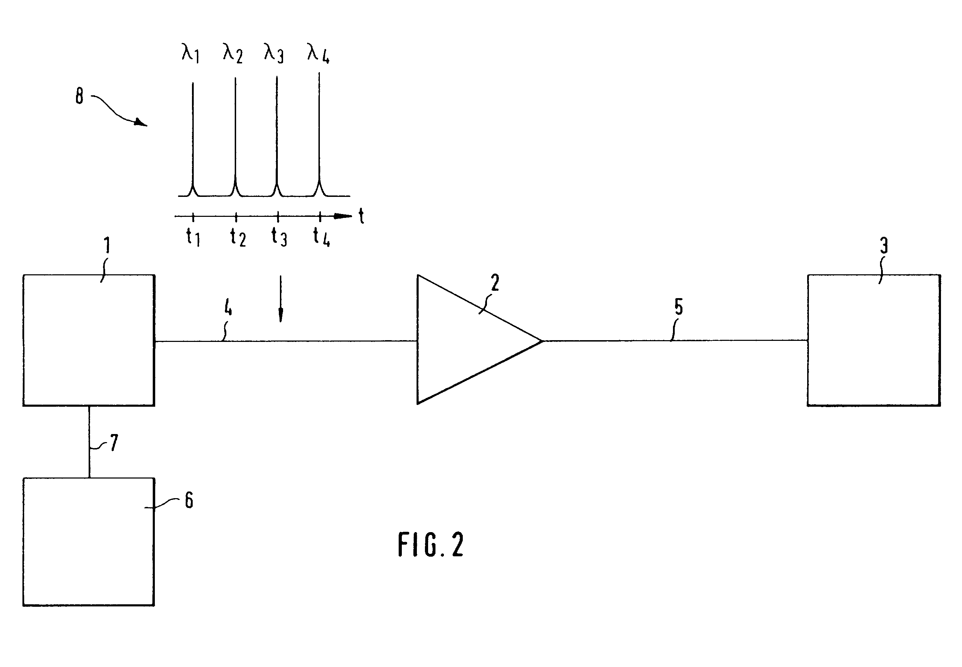

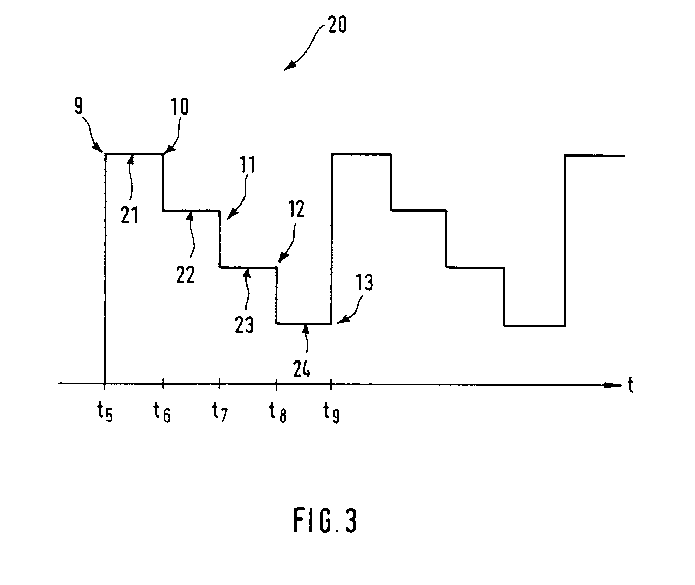

Fig. 2 is a block diagram of an apparatus arrangement for testing an optical device according to the invention. The output of a tunable laser 1 is connected with the input of the EDFA 2 via an optical fiber 4. The output of the EDFA is connected with the input of an optical signal analyzer (OSA) 3 via an optical fiber 5. Additionally, to the mentioned prior art, the arrangement according to the invention comprises a pattern generator 6. The output of the pattern generator 6 is connected via an electrical cable 7 with the control input of the tunable laser 1. The output signal of pattern generator 6, which will be described in more detail with regard to Fig. 3, controls the tunable laser 1 which generates multiple optical signals with different wavelengths λ1, λ2, λ3 and λ4. These multiple signals generated by the laser source 1 and applied to the optical fiber 4 are displayed in diagram 8. The diagram 8 shows the appearance of the multiple wavelengths λ1 to λ4 generated by the laser source 1 as a function of time t. With the aid of the pattern generator 6, the laser source 1 generates a signal with the wavelengths λ1 at a time t1. Then the tunable laser 1 switches the signal with the wavelength λ1 off and switches a signal with the wavelength λ2 on at a time t2. In the next step, the laser source 1 switches the signal with the wavelength λ2 off and switches a signal with the wavelength λ3 on at a time t3. Then the laser source 1 switches the signal with the wavelength λ3 off and switches the signal with the wavelength λ4 on at a time t4. It will be understood that instead of a pattern generator any other device can be used which controls a tunable laser in the same manner as described. Furthermore, it will be understood that more or less signals with different wavelengths can be generated by one or more tunable lasers depending on the wavelengths the device under test operates with. The time intervals between the different signals with the wavelengths λ1 to λ4 can be modified in a way that they are different. Furthermore, the time interval in which a first signal is switched on, can be longer than other time intervals. The power of the different signals can also be adjusted to different magnitudes. A wide range of variation of the different characteristics of the different signals and their time correlation allows to operate the device under test under various conditions how they appear in practice. A lot of different test patterns can be memorized in the pattern generator.

All of the signals with different wavelengths λ1 to λ4 appear in a time interval t1 to t4 which is in the time interval of the recovery time (from the signal level to the noise level when the signal is switched off) of the amplifier 2. It will be understood that it is within the scope of the invention to generate various signals with different wavelengths within the recovery time of the specific device under test.

Due to the physics of the amplifier, the amplifier shows the same behavior under the set of test signals within the recovery time of the amplifier as under conditions in practice, where multiple signals with different wavelengths are present at the same time. The recovery time of the erbium-doped fiber amplifier 2 (EDFA) is in the range of 10 ms.

Fig. 3 depicts the control signal generated by the pattern generator 6 in Fig. 2 as a function of time. The control signal 20 which is applied to the laser source 1 comprises four steps 21 to 24 at different signal levels. At a time t5 the pattern generator 6 starts generating a control signal. When the signal level reaches a certain value, the controlled laser source 1 generates a signal with a wavelength λ1 for a short time as shown in Fig. 2. Then the control signal is kept constant from edge 9 to edge 10 as indicated by the first step 21. When the control signal drops at a time t6 which is shown at edge 10 the tunable laser 1 generates a signal with the wavelength λ2 for a short time. Then the control signal is kept constant from the time interval t6 to t7 indicated by the second step 22. When the control signal 20 drops again at edge 11, the laser source 1 generates a signal with the wavelength λ3 for a short time. From a time t7 to t8 the control signal is again kept constant as indicated by the third step 23. At the edge 12 the control signal 20 drops again, switching the tunable laser 1 to generate a signal with the wavelength λ4 for a short time. From t8 to t9 the control signal 20 is kept constant as shown by the fourth step 24 and at a time t9, indicated by edge 13 the pattern generator starts repeating the described control signal.

It will be understood that the shown control signal 20 can be easily modified if a tunable laser is used having different control signals than the described.

The time interval t5 to t9 is significantly lower than 10 ms to test the erbium-doped fiber amplifier 2 with a recovery time ≈ 10 ms. Accordingly the frequency of the sequence of the steps 21 to 24 is significantly higher than 100 Hz, to operate the optical device at low recovery.

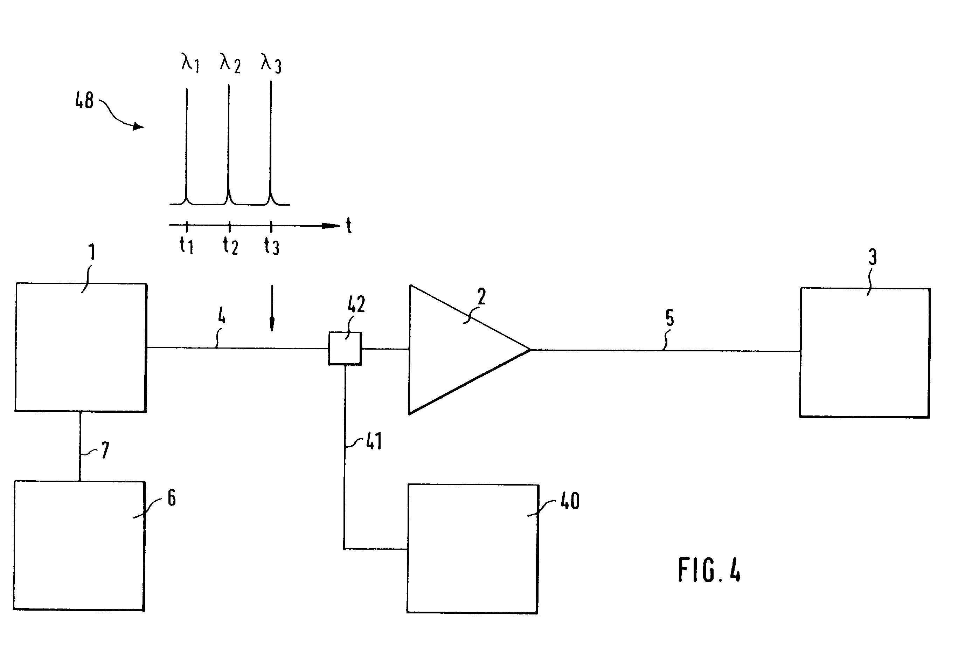

Fig. 4 shows a block diagram of a second arrangement for testing an optical device 2 comprising a further laser 40 with regard to Fig. 3, being separately adjustable. In addition to Fig. 2, Fig. 4 comprises a further laser 40, an optical fiber 41 and optical coupling means 42 coupling optical fiber 4 and optical fiber 41 to the input of the device under test, being an optical amplifier 2. As shown in diagram 48, tunable laser 1 generates optical signals with the wavelengths λ₁, λ₂ and λ₃. An optical signal with the wavelength λ₄ is generated by the separately adjustable laser 40. By this arrangement according to Fig. 4 is obtained that the optical signal with the wavelength λ₄ can be generated separately which allows to modify the signal with the wavelength λ₄ being appropriate to the test conditions to be realized. Thus, a further degree of freedom in testing an optical device is achieved. It will be understood that further lasers can be used to substitute the optical signals generated by the time multiplexed tunable laser 1 to increase the degree of freedom in adjusting the test conditions.

Furthermore it will be understood that an optical device, such as an erbium-doped fiber amplifier, can be operated via a time multiplexed tunable laser source being triggered by signals to be transmitted optically (not shown). In another embodiment of the invention a tunable laser is triggered by a pattern generator but a further laser is triggered by the signals to be transmitted optically.

## Claims

1. An arrangement for providing optical signals with different wavelengths comprising:
a single source (1) for generating multiple optical signals having different wavelengths,
characterized by:
switching means (6) for applying said multiple optical signals of said optical source (1) one after another to an optical device (2),
whereby said multiple optical signals are applicable to said optical device (2) one after another within the recovery time from the noise level with a signal applied to said device (2) to the noise level with no signal.

2. Arrangement as defined in claim 1, characterized in that said optical source is a tunable laser (1) generating said multiple optical signals.

3. Arrangement as defined in claim 2, characterized in that said switching means is a pattem generator (6) triggering said tunable laser (1) to generate said multiple optical signals (8, 48) one after another.

4. Arrangement as defined in claim 1 or 2, characterized in that said optical source (1) generates multiple signals with different wavelengths simultaneously and said switching means (6) comprise a rotating set of filters being transparent at different wavelengths and being disposed between the output of said optical source and said optical device.

5. Arrangement as defined in claim 1, characterized in said optical device is an erbium-doped fiber amplifier (EDFA) or a prasedymium-doped fiber amplifier (PDFA)

6. Arrangement for the measurement of the noise of an optical device (2), said optical device being of the type that is used to amplify multiple, optical signals with different wavelengths simultaneously, the arrangement comprising:
an arrangement according to any one of claims 1 to 5, and analyzing means (3) analyzing a response signal of said optical device (2) to be tested.

7. Method for the measurement of the noise of an optical device (2), said optical device being of the type that is used to amplify multiple optical signals with different wavelengths simultaneously, the method comprising:
a first step in which a first optical signal with a first wavelength (8;λ₁, 48; λ₁) is applied to said optical device,
a second step in which said first optical signal is switched off,
a third step in which a second optical signal with a second wavelength (8;λ_{2,} 48; λ₂) is applied to said optical device,
characterized in that
said first through third step is performed within the recovery time from the noise level with signal applied to said device to the noise level with no signal.

8. Method as defined in claim 7, characterized in that
said first and said second optical signals (λ_{1,}λ₂) are generated by a tunable laser (1) and
said first through third step is carried out by the aid of a pattern generator (6) triggering said tunable laser.

9. Method as defined in claim 7, characterized in that said optical device is an erbium-doped fiber amplifier (EDFA) or a praseodymium-doped fiber amplifier (PDFA).

## Patentansprüche

1. Vorrichtung für die Bereitstellung optischer Signale mit unterschiedlichen Wellenlängen, die folgendes umfaßt:
eine einzelne Quelle (1) zum Erzeugen mehrerer optischer Signale mit unterschiedlichen Wellenlängen,
gekennzeichnet durch:
Schaltmittel (6) zum aufeinanderfolgenden Anlegen mehrerer optischer Signale von der optischen Quelle (1) an eine optische Vorrichtung (2),
wobei die Vielzahl optischer Signale nacheinander an die optische Vorrichtung (2) innerhalb der Erholzeit vom Rauschpegel mit einem an die Vorrichtung (2) angelegten Signal bis zum Rauschpegel ohne Signal angelegt werden können.

2. Vorrichtung gemäß Anspruch 1, dadurch gekennzeichnet, daß die optische Quelle ein durchstimmbarer Laser (1) ist, der mehrere optische Signale erzeugt.

3. Vorrichtung gemäß Anspruch 2, dadurch gekennzeichnet, daß das Schaltmittel ein Mustergenerator (6) ist, der den durchstimmbaren Laser (1) auslöst, so daß dieser mehrere optische Signale (8, 48) nacheinander erzeugt.

4. Vorrichtung gemäß Anspruch 1 oder 2, dadurch gekennzeichnet, daß die optische Quelle (1) gleichzeitig mehrere Signale mit unterschiedlichen Wellenlängen erzeugt und die Schaltmittel (6) ein rotierendes Filterset umfassen, das bei unterschiedlichen Wellenlängen transparent ist und zwischen dem Ausgang der optischen Quelle und der optischen Vorrichtung plaziert ist.

5. Vorrichtung gemäß Anspruch 1, dadurch gekennzeichnet, daß die optische Vorrichtung ein erbiumdotierter Faserverstärker oder ein praseodymdotierter Faserverstärker ist.

6. Vorrichtung für die Rauschmessung bei einer optischen Vorrichtung (2), wobei es sich bei der optischen Vorrichtung um den Typ handelt, der zur gleichzeitigen Verstärkung mehrerer optischer Signale mit unterschiedlichen Wellenlängen verwendet wird, und die Vorrichtung folgendes umfaßt:
Vorrichtung gemäß einem der vorangegangenen Ansprüche 1-5 sowie Analysemittel (3) zum Analysieren eines Antwortsignals der zu prüfenden optischen Vorrichtung (2).

7. Verfahren für die Rauschmessung bei einer optischen Vorrichtung (2), wobei es sich bei der optischen Vorrichtung um den Typ handelt, der zur gleichzeitigen Verstärkung mehrerer optischer Signale mit unterschiedlichen Wellenlängen verwendet wird, und das Verfahren folgendes umfaßt:
einen ersten Schritt, bei dem ein erstes optisches Signal mit einer ersten Wellenlänge (8;λ₁, 48;λ₁) an die optische Vorrichtung angelegt wird,
einen zweiten Schritt, bei dem das erste optische Signal ausgeschaltet wird,
einen dritten Schritt, bei dem ein zweites optisches Signal mit einer zweiten Wellenlänge (8; λ₂, 48; λ₂) an die optische Vorrichtung angelegt wird,
dadurch gekennzeichnet, daß
die Schritte 1 bis 3 innerhalb der Erholzeit vom Rauschpegel mit einem an die Vorrichtung angelegten Signal bis zum Rauschpegel ohne Signal ausgeführt werden.

8. Verfahren gemäß Anspruch 7, dadurch gekennzeichnet, daß
die ersten und zweiten optischen Signale (λ₁; λ₂) von einer durchstimmbaren Laserquelle (1) erzeugt werden und
die Schritte 1 bis 3 mit Hilfe eines Mustergenerators (6) ausgeführt werden, der den durchstimmbaren Laser auslöst.

9. Verfahren gemäß Anspruch 7, dadurch gekennzeichnet, daß die optische Vorrichtung ein erbiumdotierter Faserverstärker oder ein praseodymdotierter Faserverstärker ist.

## Revendications

1. Un agencement de production de signaux optiques de longueurs d'ondes différentes, comprenant:
une source unique (1) pour engendrer de multiples signaux optiques de longueurs d'ondes différentes,
caractérisé par
un moyen commutateur (6) pour appliquer l'un après l'autre lesdits signaux optiques multiples de ladite source optique (1) à un dispositif optique (2),
lesdits signaux optiques multiples étant applicables l'un après l'autre audit dispositif optique (2) à l'intérieur du temps de récupération, à partir du niveau de bruit lorsqu'un signal est appliqué audit dispositif (2) jusqu'au niveau de bruit en l'absence de signal.

2. Agencement selon la revendication 1, caractérisé en ce que ladite source optique est un laser accordable (1) qui engendre lesdits signaux optiques multiples.

3. Agencement selon la revendication 2, caractérisé en ce que ledit moyen commutateur est un générateur (6) de motifs qui déclenche ledit laser accordable (1) pour engendrer l'un après l'autre lesdits signaux optiques multiples (8, 48).

4. Agencement selon la revendication 1 ou 2, caractérisé en ce que ladite source optique (1) engendre simultanément des signaux multiples de longueurs d'ondes différentes et ledit moyen commutateur (6) comprend un ensemble tournant de filtres qui sont transparents à des longueurs d'ondes différentes et sont disposés entre la sortie de ladite source optique et ledit dispositif optique.

5. Agencement selon la revendication 1, caractérisé en ce que ledit dispositif optique est un amplificateur à fibre dopée à l'erbium (EDFA) ou un amplificateur à fibre dopée au praséodyme (PDFA).

6. Agencement de mesure du bruit d'un dispositif optique (2), ledit dispositif optique étant du type qui est utilisé pour amplifier simultanément des signaux optiques multiples de longueurs d'ondes différentes, l'agencement comprenant:
un agencement selon l'une quelconque des revendications 1 à 5, et un moyen analyseur (3) qui analyse un signal de réponse dudit dispositif optique (2) à tester;

7. Procédé de mesure du bruit d'un dispositif optique (2), ledit dispositif optique étant du type qui est utilisé pour amplifier simultanément des signaux optiques multiples de longueurs d'ondes différentes, le procédé comprenant:
une première étape dans laquelle un premier signal optique d'une première longueur d'onde (8; λ₁, 48, λ₁) est appliqué audit dispositif optique;
une deuxième étape dans laquelle ledit premier signal optique est commuté hors service,
une troisième étape dans laquelle un deuxième signal optique d'une deuxième longueur d'onde (8; λ₂, 48; λ₂) est appliqué audit dispositif optique;
caractérisé en ce que
lesdites trois étapes, de la première à la troisième, sont effectuées à l'intérieur du temps de récupération, à partir du niveau de bruit lorsqu'un signal est appliqué audit dispositif jusqu'au niveau de bruit en l'absence de signal.

8. Procédé selon la revendication 7, caractérisé en ce que
lesdits premier et deuxième signaux optiques (λ₁, λ₂) sont engendrés par un laser accordable (1); et
lesdites trois étapes, de la première à la troisième, sont mises en oeuvre à l'aide d'un générateur (6) de motifs qui déclenche ledit laser accordable.

9. Procédé selon la revendication 7, caractérisé en ce que ledit dispositif optique est un amplificateur à fibre dopée à l'erbium (EDFA) ou un amplificateur à fibre dopée au praséodyme (PDFA).
